# EUROPÄISCHE PATENTSCHRIFT

(11) **EP 1 511 613 B1**
(45) Veröffentlichungstag und Bekanntmachung des Hinweises auf die Patenterteilung: **14.06.2006**
(21) Anmeldenummer: 03717209.5
(22) Anmeldetag: 13.03.2003
(51) Int. Cl.: B29C 45/50, F16H 25/20

(54) **ELEKTROMOTORISCH BETRIEBENER LINEAR- UND DREHSTELLANTRIEB**
ELECTRIC MOTOR-OPERATED LINEAR AND ROTARY ACTUATOR
ENTRAINEMENT LINEAIRE ET ROTATIF FONCTIONNANT GRACE A UN MOTEUR ELECTRIQUE

(30) Priorität: 23.05.2002 DE 10222748
(43) Veröffentlichungstag der Anmeldung: 09.03.2005
(73) Patentinhaber: Demag Ergotech GmbH, 90571 Schwaig (DE); L&T-Demag Plastics Machinery Private Limited, Chennai-600 089 (IN)
(72) Erfinder: ICKINGER, Georg, Michael, 8010 Graz (AT); HARISH, Kittappa, Gowda, Chennai 600 031 (IN); SAJU, Mangalasseril, Chennai 600 020 (IN); SIVAKUMAR, Shanmugham, Chennai 600 020 (IN); KUMAR, Mathrubootmam, Chennai 600 091 (IN); VIVEK, Anand, Sukumaran, Chennai 600 073 (IN)
(74) Vertreter: Wilhelm, Ludwig
(86) Internationale Anmeldenummer: PCT/EP2003/002606
(87) Internationale Veröffentlichungsnummer: WO 2003/099538

(56) Entgegenhaltungen:
- US-A- 5 645 868
- PATENT ABSTRACTS OF JAPAN vol. 018, no. 354 (M-1632), 5. Juli 1994 (1994-07-05) -& JP 06 091709 A (SODICK CO LTD), 5. April 1994 (1994-04-05)

## Beschreibung

Die Erfindung bezieht sich auf einen elektromotorisch betriebenen Linear- und Drehstellantrieb, auch elektromotorischer Steller genannt, gemäß dem Oberbegriff des Patentanspruchs 1. Bevorzugtes Anwendungsgebiet der Erfindung sind Linear- und Drehstellantriebe bei Spritzgießmaschinen, wie sie insbesondere für die Plastifizierschnecke eines Einspritzaggregates vorgesehen sind.

Bei einem Einspritzaggregat mit einem Linear- und Drehstellantrieb dieser Art mit einem aus einem Hohlwellenmotor und einem nachgeschalteten Spindeltrieb bestehenden, elektrischen Einmotorantrieb, wie es etwa aus der US 5 645 868 bekannt ist, besteht das Umschaltwerk zur Umsteuerung zwischen Schneckendreh- und Schneckenhubantrieb aus drei Einwegkupplungen, von denen die ersten beiden beim Einspritzhub der Plastifizierschnecke zur Verhinderung einer Schneckenrückdrehung und zur Verkuppelung des Elektromotors mit dem Spindeltrieb eingerückt sind, während die dritte den Elektromotor in der Plastifizierphase bei dann freilaufenden, ersten beiden Einwegkupplungen unmittelbar mit der Plastifizierschnecke antriebsschlüssig verbindet. Bei einem derartigen Einmotorantrieb wird jedoch zur Erzeugung des Schnecken-Gegendrucks während des Plastifiziervorgangs ein zusätzlicher Hilfsmotor benötigt, und vor allem müssen beim Einspritzvorgang - mit Ausnahme der Spindelmutter - sämtliche Antriebskomponenten, also beide Elektromotoren einschließlich der Spindelwelle, der zugehörigen Lagerstellen und der Einwegkupplungen, gemeinsam mit der Plastifizierschnecke relativ zum Plastifizierzylinder axial verfahren werden, so dass die bewegte und gelagerte Masse sehr groß ist.

Das Dokument JP-A-06091709 offenbart einen Linear - und Drehstellantrieb gemäß dem Oberbegriff des Anspruchs 1

Aufgabe der Erfindung ist es, das Einspritzaggregat der eingangs genannten Art so auszubilden, dass der Leistungsbedarf des Einmotorantriebs deutlich reduziert und eine merkliche Entlastung der für die Schneckenhubbewegung erforderlichen Lagerstellen erzielt wird.

Diese Aufgabe wird erfindungsgemäß durch einen elektromotorischen Linear- und Drehstellantrieb mit den im Patentanspruch 1 angegebenen Merkmalen gelöst.

Bei dem erfindungsgemäßen Linear- und Drehstellantrieb werden im Wesentlichen nur der Rotor des Elektromotors zusammen mit der schneckenseitigen Rotorlagerung und dem vom Rotor drehbar angetriebenen Getriebeelement beim Einspritzhub der Plastifizierschnecke axial mitverfahren, während die Hauptmasse des Einmotorantriebs, also das gesamte Motorgehäuse einschließlich des Stators und der gehäuseseitigen Lagerstellen, relativ zum Plastifizierzylinder stillsteht, so dass die linear bewegte und gelagerte Masse deutlich reduziert wird, mit der Folge, dass die Leistungsanforderungen an den Einmotorantrieb signifikant verringert und die Linearführungen für die axial bewegten Antriebskomponenten von den Reaktionsmomenten des Elektromotors freigehalten werden.

Vorzugsweise ist der Rotor mit dem zugeordneten Getriebeelement des Spindeltriebs und über ein erstes, selektiv einrückbares Schaltelement mit der Plastifizierschnecke drehfest verbunden, während die Plastifizierschnecke durch ein zweites Schaltelement selektiv drehfest arretierbar und das andere Getriebeelement des Spindeltriebs axial unverschieblich und unter Zwischenschaltung eines dritten, variabel drehmomentübertragend einstellbaren Schaltelements drehbar am Motorgehäuse gelagert ist. Durch diese relativ zum Motorgehäuse und damit auch zur Plastifizierschnecke axial unverschiebliche Anordnung des dritten Schaltelements wird die beim Schneckenhub linear bewegte Masse weiter verringert, wobei eine besonders bevorzugte Ausgestaltung der Erfindung darin besteht, dass das erste Schaltelement eine schaltbare Kupplung, das zweite Schaltelement eine Einwegsperre oder Bremse und das dritte Schaltelement eine regelbare Bremse ist. Hierdurch ist es möglich, den Einmotorantrieb ohne Drehrichtungsumkehr zwischen dem Schneckenhub- und dem Schneckendrehmodus umzuschalten und den Schnecken-Gegendruck unter Verzicht auf einen zusätzlichen Antriebsmotor allein durch entsprechende Bremsbetätigung des zweiten Schaltelements einzuregulieren. Durch eine zueinander koaxiale Anordnung von Elektromotor, Spindeltrieb und Plastifizierschnecke lässt sich eine besonders platzsparende Bauweise erzielen und zugleich entfallen die sonst bei exzentrischer Anordnung benötigten, verschleißanfälligen Transmissions-, also etwa Riementriebe. Gleichfalls aus Gründen einer gedrängten Bauweise kann der Rotor als Hohlwellenrotor mit in den Rotorinnenraum eingreifendem Spindeltrieb ausgebildet sein. Im Hinblick auf eine weitere Verringerung der Massenträgheitskräfte empfiehlt es sich schließlich, die statorseitige Magnetpolanordnung gegenüber der rotorseitigen axial länger auszubilden und die Spindelmutter drehfest mit dem Rotor zu verbinden, während die Spindelwelle des Spindeltriebs axial unverschieblich am Motorgehäuse angeordnet wird.

Die Erfindung wird nunmehr anhand eines Ausführungsbeispiels in Verbindung mit den Zeichnungen näher erläutert. Es zeigen in stark schematisierter Darstellung:
- **Fig. 1**: einen Längsschnitt eines Einspritzaggregats nach der Erfindung in der Rückhubposition der Plastifizierschnecke; und
- **Fig. 2**: eine der Fig. 1 entsprechende Darstellung in der Vorschubposition der Plastifizierschnecke.

Die Erfindung soll nachfolgend anhand eines Einspritzaggregates einer Spritzgießmaschine näher beschrieben werden. Das von dem elektromotorischen Steller zu stellende Element ist in diesem Fall die Plastifizierschnecke. Der erfindungsgemäße Linear- und Drehstellantrieb kann jedoch auch in anderen Bereichen der Technik verwendet werden, wo eine kombinierte Linear- und Drehbewegung gewünscht ist.

Die Fig. zeigen die rückwärtigen Teilstücke des Plastifizierzylinders 1 und der darin gelagerten Plastifizierschnecke 2 einer ansonsten nicht näher dargestellten Spritzgießmaschine. Mit dem Plastifizierzylinder 1 ist das Gehäuse 3 eines insgesamt mit 4 bezeichneten Einmotorantriebs fest verbunden, weicher einen gehäusefesten Stator 5 mit einer elektrisch erregten Magnetpolanordnung 6 sowie einen Hohlwellenrotor 7 mit einer mit der Magnetpolanordnung 6 über einen Luftspalt 8 magnetisch verkoppelten Magnetpolanordnung 9 enthält. Der Rotor 7 ist über einen Hohlwellenzapfen 10 und eine Tragbrücke 11 an zur Drehachse des Rotors 7 und der Plastifizierschnecke 2 achsparallelen, sich zwischen Plastifizierzylinder 1 und Motorgehäuse 3 erstreckenden Linearführungen 12 relativ zum Motorgehäuse 3 und zum Plastifizierzylinder 1 axial verschieblich und an der Tragbrücke 11 über Wälzlager 13 drehbar gelagert.

Die Plastifizierschnecke 2 ist mit einem Wellenzapfen 14 fest verbunden und über diesen und einen Axial-/Radiallagersatz 15 in Axialrichtung verschiebefest, aber drehbar mit dem Hohlwellenzapfen 10 und somit auch mit dem Rotor 7 verkoppelt.

Im Innenraum des Hohlwellenrotors 7 befindet sich ein Kugelspindeltrieb 16, bestehend aus einer drehfest mit dem Rotor 7 verbundenen Spindelmutter 17 und einer Spindelwelle 18, welche über einen weiteren Axial-/Radiallagersatz 19 axial unverschieblich am Motorgehäuse 3 drehgelagert ist.

Die Umsteuerung des Einmotorantriebs 4 zwischen einem Schneckenhubantrieb in der Einspritzphase und einem Schneckendrehantrieb in der Plastifizierphase erfolgt durch drei selektiv betätigte Schaltelemente, nämlich ein erstes Schaltelement in Form einer selektiv einrückbaren Kupplung 20 zwischen Rotor 7 und Wellenzapfen 14, ein zweites Schaltelement in Form einer eine Rückwärtsdrehung der Plastifizierschnecke 1 verhindernden Einwegkupplung oder Bremse 21 mit einer zugehörigen, drehfest am Wellenzapfen 14 befestigten Bremsscheibe 22, und ein drittes Schaltelement in Form einer regelbaren, mit einer an der Spindelwelle 18 befestigten Bremsscheibe 23 zusammenwirkenden Bremse 24.

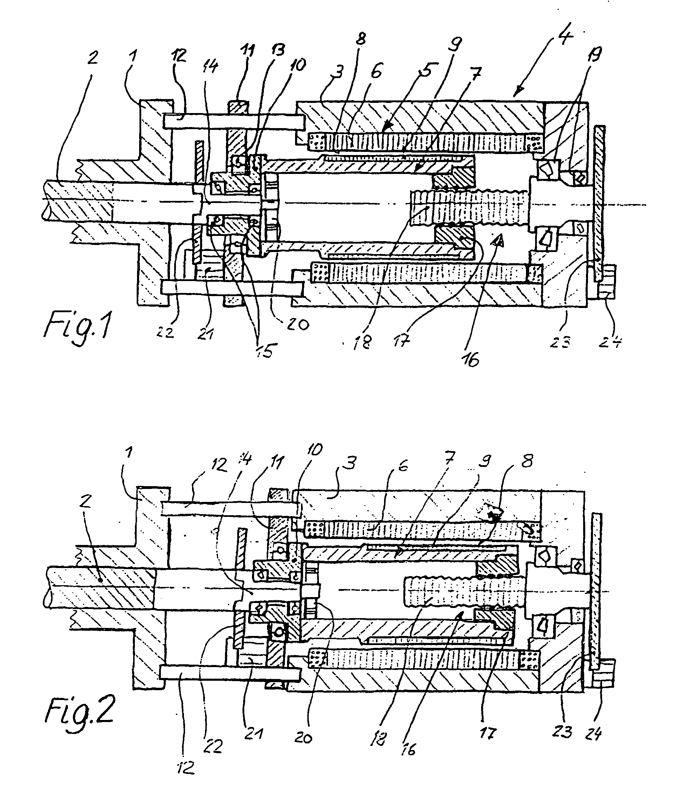

Ausgehend von der in Fig. 2 gezeigten Rückhublage des Einspritzaggregats wird der Einspritzvorgang dadurch eingeleitet, dass die Bremsen 21 und 24 betätigt und dadurch die Plastifizierschnecke 2 an der Tragbrücke 11 und die Gewindespindel 18 am Motorgehäuse 3 drehfest arretiert werden, während die Kupplung 20 ausgerückt wird. Der Rotor 7 dreht die Spindelmutter 17, so dass er axial nach vorne läuft und dadurch, geführt durch die Tragbrücke 11, die Plastifizierschnecke 2 nach vorne verschiebt, ohne dass diese rotiert. Am Ende des Einspritzhubs befindet sich das Einspritzaggregat in der in Fig. 1 dargestellten Vorschubposition. Da die statorseitige Magnetpolanordnung 6, wie gezeigt, dem Hubweg des Rotors 7 entsprechend länger als die rotorseitige Magnetpolanordnung 9 ausgebildet ist, wird während des gesamten Hubbereichs des Rotors 7 eine gleich hohe magnetische Ankoppelung erzielt.

In der Plastifizierphase wird die Plastifizierschnecke 2 in Drehrichtung angetrieben und durch das aufplastifizierte und in den (nicht gezeigten) Schneckenvorraum geförderte Material axial nach hinten geschoben, wobei eine definierte Gegenkraft (Staudruck) aufgebracht werden muss. Zu diesem Zweck wird, ausgehend von der Vorschubposition nach Fig. 1, die Bremse 21 gelöst und die Kupplung 20 eingerückt, so dass der Rotor 7 die Plastifizierschnecke 2 mit der erforderlichen Plastifizierdrehzahl antreibt. Die Bremse 24 wird so einreguliert, dass die Gewindespindel 18 mit annähernd gleicher Drehzahl wie der Rotor 7 umläuft. Aus der Drehzahldifferenz ergibt sich die Rücklaufgeschwindigkeit bzw. aus der Bremskraft der Staudruck der Plastifizierschnecke 2.

## Patentansprüche

1. Elektromotorischer Linear - und Drehstellantrieb, insbesondere für ein Einspritzaggregat einer Spritzgießmaschine, mit einem elektrischen Einmotorantrieb (4) für das zu stellende Element, insbesondere die Plastifizierschnecke (2), einschließlich eines zwischen dem Rotor (7) des Antriebsmotors (4) und dem Motorgehäuse (3) wirksamen Spindeltriebs (16), sowie mit mehreren, selektiv betätigten Schaltelementen (20, 21, 22, 23, 24) zur Umsteuerung des Einmotorantriebs (4) zwischen einem Dreh- und einem Hubantrieb, **dadurch gekennzeichnet, dass**
der Rotor (7) gemeinsam mit dem zu stellenden Element, insbesondere der Plastifizierschnecke (2), und dem vom Rotor drehbar angetriebenen Getriebeelement (17) des Spindeltriebs (16) relativ zum Motorgehäuse (3) hubbeweglich angeordnet und eine der stator- oder rotorseitigen Magnetpolanordnungen (6) gegenüber der anderen (9) dem Hubweg des Rotors entsprechend verlängert ist.

2. Elektromotorischer Linear und Drehstellantrieb nach Anspruch 1, **dadurch gekennzeichnet, dass**
der Rotor (7) mit dem zugeordneten Getriebeelement (17) des Spindeltriebs (16) und über ein selektiv einrückbares, erstes Schaltelement (20) mit dem zu stellenden Element, insbesondere der Plastifizierschnecke (2), drehfest verbunden, das zu stellende Elment, insbesondere die Plastifizierschnecke (2), durch ein zweites Schaltelement (21, 22) selektiv drehfest arretierbar und das andere Getriebeelement (18) axial unverschieblich und unter Zwischenschaltung eines dritten, variabel drehmomentübertragend einstellbaren Schaltelements (23, 24) drehbar am Motorgehäuse (3) gelagert ist.

3. Elektromotorischer Linear- und Drehstellantrieb nach Anspruch 2, **dadurch gekennzeichnet, dass**
das erste Schaltelement eine schaltbare Kupplung (20), das zweite Schaltelement eine Einwegsperre oder Bremse (21, 22) und das dritte Schaltelement eine Bremse (23, 24) ist.

4. Elektromotorischer Linear- und Drehstellantrieb nach einem der vorhergehenden Ansprüche, **dadurch gekennzeichnet, dass**
der Elektromotor (4), der Spindeltrieb (16) und das zu stellende Element, insbesondere die Plastifizierschnecke (2), koaxial zueinander angeordnet sind.

5. Elektromotorischer Linear- und Drehstellantrieb nach einem der vorhergehenden Ansprüche, **dadurch gekennzeichnet, dass**
die statorseitige Magnetpolanordnung (6) gegenüber der rotorseitigen (9) axial verlängert ist.

6. Elektromotorischer Linear- und Drehstellantrieb nach einem der vorhergehenden Ansprüche, **dadurch gekennzeichnet, dass**
der Rotor (7) als Hohlwellenrotor mit in den Rotorinnenraum eingreifendem Spindeltrieb (16) ausgebildet ist.

7. Elektromotorischer Linear- und Drehstellantrieb nach Anspruch 6, **dadurch gekennzeichnet, dass**
das rotorseitige Getriebeelement die Spindelmutter (17) und das gehäuseseitige Getriebeelement die Spindelwelle (18) des Spindeltriebs (16) ist.

8. Einspritzaggregat für eine Spritzgießmaschine mit einem elektromotorischen Linear- und Drehstellantrieb nach einem der Ansprüche 1 bis 7 für die Hub- und die Drehbewegung der Plastifizierschnecke.

## Claims

1. Electromotive linear and rotary actuator, in particular for an injection unit of an injection moulding machine, comprising an electric single motor drive (4) for the element to be adjusted, in particular the plasticizing screw (2), including a spindle drive (16) acting between the rotor (7) of the drive motor (4) and the motor housing (3), and comprising a plurality of selectively actuated switching elements (20, 21, 22, 23, 24) for changing over the single motor drive (4) between a rotary and a stroke drive, **characterised in that** the rotor (7), together with the element to be adjusted, in particular the plasticizing screw (2) and the gearing element (17) of the spindle drive (16), rotatably driven by the rotor, is arranged so as to have a stroke movement relative to the motor housing (3) and one of the magnetic pole arrangements (6) on the stator or rotor side is extended relative to the other arrangement (9) according to the stroke path of the rotor.

2. Electromotive linear and rotary actuator according to claim 1, **characterised in that** the rotor (7) is non-rotatably connected to the associated gearing element (17) of the spindle drive (16) and to the element to be adjusted, in particular the plasticizing screw (2), via a selectively engageable, first switching element (20), the element to be adjusted, in particular the plasticizing screw (2) being selectively non-rotatably lockable by a second switching element (21, 22) and the other gearing element (18) being rotatably mounted on the motor housing (3), axially non-displaceably and with the interposition of a third switching element (23, 24) which can be adjusted to variably transmit torque.

3. Electromotive linear and rotary actuator according to claim 2, **characterised in that** the first switching element is a switchable coupling (20), the second switching element is a one-way lock or brake (21, 22) and the third switching element is a brake (23, 24).

4. Electromotive linear and rotary actuator according to any one of the preceding claims, **characterised in that** the electric motor (4), the spindle drive (16) and the element to be adjusted, in particular the plasticizing screw (2) are arranged coaxially with respect to one another.

5. Electromotive linear and rotary actuator according to any one of the preceding claims, **characterised in that** the magnetic pole arrangement (6) on the stator side is axially extended relative to the rotor-side arrangement (9).

6. Electromotive linear and rotary actuator according to any one of the preceding claims, **characterised in that** the rotor (7) is configured as a hollow shaft rotor with a spindle drive (16) engaging in the rotor interior.

7. Electromotive linear and rotary actuator according to claim 6, **characterised in that** the gearing element on the rotor side is the spindle nut (17) and the gearing element on the housing side is the spindle shaft (18) of the spindle drive (16).

8. Injection unit for an injection moulding machine with an electromotive linear and rotary actuator according to any one of claims 1 to 7 for the stroke and the rotary movement of the plasticizing screw.

## Revendications

1. Entraînement linéaire et à mécanisme de commande rotatif électromoteur, en particulier pour un groupe d'injection d'une presse d'injection, avec un entraînement à un moteur électrique (4) pour l'élément à commander, en particulier la vis de plastification (2), y compris un entraînement à broche (16) qui agit entre le rotor (7) du moteur d'entraînement (4) et le bâti du moteur (3), ainsi qu'avec plusieurs éléments de commutation actionnés sélectivement (20, 21, 22, 23, 24) pour faire passer l'entraînement à un moteur (4) d'un entraînement par rotation à un entraînement par montée,
**caractérisé en ce que**
le rotor (7) est disposé de manière à pouvoir effectuer un mouvement de montée par rapport au bâti du moteur (3) avec l'élément à commander, en particulier avec la vis de plastification (2) et avec l'élément d'engrenage (17) de l'entraînement à broche (16) entraîné par le rotor de manière à tourner, et **en ce qu'**un des dispositifs à pôle magnétique côté stator ou rotor (6) est prolongé par rapport à l'autre (9) en fonction de la course de montée du rotor.

2. Entraînement linéaire et à mécanisme de commande rotatif électromoteur selon la revendication 1,
**caractérisé en ce que**
le rotor (7) est relié à l'élément à commander, en particulier à la vis de plastification (2) avec l'élément d'engrenage affecté (17) de l'entraînement à broche (16) et via un premier élément de commutation à engrenage sélectif (20) de manière à résister à la torsion, **en ce que** l'élément à commander, en particulier la vis de plastification (2) peut être arrêté sélectivement de manière à résister à la torsion par le biais d'un deuxième élément de commutation (21, 22) et **en ce que** l'autre élément d'engrenage (18) est logé de manière à pouvoir tourner sur le bâti du moteur (3) de manière à ne pas pouvoir être déplacé axialement et en intercalant un troisième élément de commutation (23, 24) réglable qui transmet un couple de manière variable.

3. Entraînement linéaire et à mécanisme de commande rotatif électromoteur selon la revendication 2,
**caractérisé en ce que**
le premier élément de commutation est un accouplement embrayable (20), le deuxième élément de commutation un dispositif de blocage unidirectionnel ou un frein (21, 22) et le troisième élément de commutation un frein (23, 24).

4. Entraînement linéaire et à mécanisme de commande rotatif électromoteur selon une des revendications précédentes, **caractérisé en ce que**
le moteur électrique (4), l'entraînement à broche (16) et l'élément à commander, en particulier la vis de plastification(2) sont disposés de manière coaxiale les uns par rapport aux autres.

5. Entraînement linéaire et à mécanisme de commande rotatif électromoteur selon une des revendications précédentes, **caractérisé en ce que**
la disposition des pôles magnétiques côté stator (6) est prolongée axialement par rapport à celle côté rotor (9).

6. Entraînement linéaire et à mécanisme de commande rotatif électromoteur selon une des revendications précédentes, **caractérisé en ce que**
le rotor (7) est réalisé comme rotor à arbre creux avec un entraînement à broche (16) qui entre en prise dans l'intérieur du rotor.

7. Entraînement linéaire et à mécanisme de commande rotatif électromoteur selon la revendication 6,
**caractérisé en ce que**
l'élément d'engrenage côté rotor est l'écrou de broche (17) et l'élément d'engrenage côté bâti est l'arbre à broche (18) de l'entraînement à broche (16).

8. Groupe d'injection pour une presse d'injection avec un entraînement linéaire et à mécanisme de commande rotatif électromoteur selon une des revendications 1 à 7 pour le mouvement de montée et de rotation de la vis de plastification.
